# NEUE EUROPÄISCHE PATENTSCHRIFT

(11) **EP 3 528 226 B2**
(45) Veröffentlichungstag und Bekanntmachung des Hinweises auf die Entscheidung über den Einspruch: **23.04.2025**
(45) Hinweis auf die Patenterteilung: 17.08.2022
(21) Anmeldenummer: 19157911.9
(22) Anmeldetag: 19.02.2019
(51) Int. Cl.: G08C 17/02, G05B 19/042, G08B 25/10, G08G 1/01, H05B 39/04, G08G 1/052, G08G 1/054, G08G 1/14

(54) **SYSTEMGERÄT ZUM BETRIEB IN EINEM DRAHTLOSEN NETZWERK**
SYSTEM DEVICE FOR OPERATION IN A WIRELESS NETWORK
APPAREIL DE SYSTÈME DESTINÉ À FONCTIONNER DANS UN RÉSEAU SANS FIL

(30) Priorität: 20.02.2018 DE 102018103717
(43) Veröffentlichungstag der Anmeldung: 21.08.2019
(73) Patentinhaber: SITECO GmbH, 83301 Traunreut (DE)
(72) Erfinder: Prodell, Peter, 83308 Trostberg (DE); Rhein, Markus, 83329 Otting (DE)
(74) Vertreter: Schmidt, Steffen

(56) Entgegenhaltungen:
- EP-A1- 3 076 763
- EP-A2- 1 852 779
- WO-A1-2010/095087
- WO-A1-2014/147524
- WO-A1-2015/121781
- WO-A2-2006/099422
- WO-A2-2008/078256
- WO-A2-2014/198533
- CA-A1- 2 852 445
- GB-A- 2 538 796
- GB-A- 2 538 796
- US-A1- 2008 054 821
- US-A1- 2015 048 760
- US-A1- 2017 156 189
- US-A1- 2017 188 441
- US-B1- 9 888 551
- US-B2- 9 049 116
- JTAG ICE - User Guide

## Beschreibung

Die vorliegende Erfindung betrifft ein Systemgerät, welches dafür eingerichtet ist, in einem drahtlosen Netzwerk aus mehreren derartigen Systemgeräten und ggf. einer Zwischenstation betrieben zu werden. Die Systemgeräte sind jeweils zum Betrieb einer Beleuchtungseinrichtung, Gebäudetechnik, Signaltechnik und/oder Sensortechnik eingerichtet, wobei die Systemgeräte über eine drahtlose Schnittstelle verfügen.

Netzwerke aus drahtlos verbundenen Systemgeräten der eingangs genannten Art sind im Stand der Technik beispielsweise durch die Verwendung des Bluetooth-Protokoll oder als WiFi, d.h. allgemein WLANs, die die Spezifikation der drahtlosen Protokoll-Familie aus 802.11 verwenden, bekannt. Diese Standards sind jedoch bereits für ein hohes Datenaufkommen ausgelegt, welches für die Steuerung von Beleuchtungstechnik, Gebäudetechnik, Signaltechnik und/oder Sensortechnik häufig gar nicht erforderlich ist. Eine Protokollspezifikation für drahtlose Netzwerke mit geringerem Datenaufkommen ist beispielsweise in Form von ZigBee bekannt. Allerdings wurde erkannt, dass das ZigBee-Protokoll wesentliche Sicherheitslücken aufweist. Obgleich eine Verschlüsselung der ausgetauschten Daten vorgesehen ist, ist dieser Schlüssel beispielsweise für alle ZigBee-Geräte durch einen Masterkey definiert, den alle zertifizierten Hersteller der Geräte verwenden. Es besteht daher das Risiko, dass der Masterkey nicht geheim gehalten werden kann, wodurch eine potentielle Sicherheitslücke entsteht.

Die Steuerung von Beleuchtungstechnik, Gebäudetechnik, Signaltechnik und/oder Sensortechnik kann jedoch durchaus sicherheitsrelevante Bereiche betreffen. Insbesondere Signalanlagen, wie Ampelanlagen für die Steuerung des Verkehrsflusses, oder Sensoreinheiten, wie Bewegungsmelder als Alarmgeber bei einer Gebäudeüberwachung, betreffen unmittelbar sicherheitsrelevante Bereiche. Auch Beleuchtungstechnik im Innen- oder im Außenraum, soll vor unbefugten Zugriffen geschützt werden, da ein Ausfall einer Beleuchtungseinrichtung, z.B. im Außenbereich für eine Verkehrsfläche mit hoher Verkehrsdichte oder im Innenbereich zur Ausleuchtung von Fluchtwegen, durchaus sicherheitsrelevant ist.

CA 2 852 445 A1 und US 2008/054821 A1 offenbaren ein Steuergerät gemäß dem Oberbegriff des Anspruchs 1. US 2017/156189 A1 offenbart eine Steuerung für ein Leuchtensystem. Gemäß einer Ausführungsform sieht ein Controller ein Betriebsprotokoll vor, welches die Programmierung des Controllers nur über eine direkte physikalische Verbindung zum Controller ermöglicht.

Aufgabe der vorliegenden Erfindung ist es, ein geeignetes Systemgerät bereit zu stellen, welches in einem Netzwerk betrieben werden kann, sowie eine Zwischenstation zum Ansteuern der Systemgeräte bereitzustellen, die auf möglichst einfache Weise, drahtlos kommunizieren können und dabei trotzdem einen ausreichenden Sicherheitsstandard gewährleisten.

Gelöst wird die Aufgabe durch ein Systemgerät nach Anspruch 1 und ein System mit einer Zwischenstation und einem Systemgerät nach Anspruch 14.

Eine Besonderheit der erfindungsgemäßen Systemgeräte besteht darin, dass sie autonom gemäß einem vorgegebenen Programm betrieben werden, welches in dem Systemgerät gespeichert ist und durch eine drahtlose Schnittstelle auch nicht geändert werden kann. Lediglich ein Wechsel des Programms aus einer vorgegebenen Anzahl von mehreren Programmen, die lokal im Systemgerät gespeichert sind, kann über die drahtlose Schnittstelle erfolgen. Beispielsweise kann das Programm eine Zeitsteuerung der betreffenden Ausführungseinheit im Systemgerät umfassen. Die Zeitsteuerung kann ggf. durch einen Programmwechsel in einen anderen Modus gebracht werden, z.B. um von einem Sommer- zu einem Winterbetrieb umzuschalten oder dergleichen. Es können jedoch keine neuen Programme drahtlos auf das Systemgerät aufgespielt werden oder bestehende Programme über die drahtlose Schnittstelle geändert werden. Dadurch kann im Fall eines Hackerangriffs auf die drahtlose Schnittstelle kein großer Schaden angerichtet werden. Die einzige nicht-autorisierte Veränderung, die ein Hacker vornehmen könnte, besteht lediglich darin, dass er eines der vorinstallierten Programme auswählen kann. Das Systemgerät wird jedoch autonom in dem betreffenden Programm weiterbetrieben, so dass ein potentieller Schaden minimal ist.

Gemäß einer bevorzugten Ausführungsform kann ferner vorgesehen sein, dass die drahtlose Schnittstelle dazu eingerichtet ist, nur innerhalb definierter Zeitfenster Anweisungen zu empfangen. Beispielsweise kann die drahtlose Schnittstelle nur einmal täglich, wöchentlich, monatlich oder jährlich Daten empfangen, um das Programm für den autonomen Betrieb des betreffenden Systemgeräts zu wechseln. Einem nicht-autorisierten Angriff auf das Gerät ist dadurch Vorsorge geleistet, dass der nicht-autorisierte Zugriff nicht mehr spontan erfolgen kann. Da für einen potenziellen Angreifer auch die Zeitfenster nicht erkennbar sind, kann auch ein nicht-autorisierter Programmwechsel im Systemgerät wirksam verhindert werden. Es kann vorgesehen sein, dass die drahtlose Schnittstelle zum Empfangen von Anweisungen über das Programm des Systemgeräts gesteuert wird und es kann weiterhin vorgesehen sein, dass mit einem Wechsel des Programms des Systemgeräts auch ein Wechsel des Zeitintervalls bis zum nächsten Einschalten der drahtlosen Schnittstelle zum Empfang von Anweisungen vorgesehen ist. Wenn während des Einschaltzeitraums der drahtlosen Schnittstelle keine Anweisung eingeht, kann das laufende Programm weiter betrieben werden. Eine Bestätigung des laufenden Programms während des Einschaltzeitraums der drahtlosen Schnittstelle kann einer Programmänderung gleichwertig sein. Es kann auch vorgesehen sein, dass während des Empfangszeitraums der drahtlosen Schnittstelle nur eine Programmänderung durchgeführt werden kann. Ferner kann vorgesehen sein, dass die drahtlose Schnittstelle zum Empfangen von Anweisungen nach dem Eingang der Programmänderung abgeschaltet wird.

Gemäß einer bevorzugten Ausführungsform ist die drahtlose Schnittstelle ferner zum Senden eingerichtet, um Daten in Bezug auf den Betriebszustand des Systemgeräts zu versenden. Dadurch lässt sich das Systemgerät über das drahtlose Netzwerk überwachen. Ferner ist gemäß einer bevorzugten Ausführungsform auch vorgesehen, dass die drahtlose Schnittstelle zum Senden von Daten eingerichtet ist und das Systemgerät ferner eine Sensoreinheit aufweist, die dafür eingerichtet ist, mit der Sensoreinheit erfasste Daten über die drahtlose Schnittstelle zu senden. Diese Ausführungsform eignet sich für Systemgeräte, welche zur Datenerfassung mit einer Sensoreinheit eingerichtet sind, um beispielsweise Licht, Bilder, Bewegungen, insbesondere Verkehrsdichte oder Parkplatzverfügbarkeit, Geschwindigkeiten von Fahrzeugen, Ort und Richtung von Verkehrsteilnehmern oder Umweltbedingungen, insbesondere Temperatur, Feuchte und Druck, zu erfassen und an eine Zentrale weiterzuleiten.

Derartige Daten sind im Prinzip nicht sensibel. Selbst wenn es einem Angreifer gelingt, die drahtlose Kommunikation zu belauschen, kann daraus kein unbefugter Zugriff auf das Gerät erfolgen, weil nur Steuerdaten der eingangs genannten Art von dem Gerät verarbeitet werden können.

Gemäß einer bevorzugten Ausführungsform weist das Systemgerät eine Signaleinheit auf, um visuelle, optische oder akustische Signale abzugeben. Ein Systemgerät, welches mit einem Bewegungsmelder versehen ist, kann beispielsweise ein akustisches Alarmsignal abgeben. Diese Funktionen werden jedoch autonom durch das im Systemgerät vorhandene Programm gesteuert, so dass ein Angriff auf die Funktionsweise der Signaleinheit keine prinzipielle Änderung der Funktionstüchtigkeit des Systemgerätes hervorrufen kann. Ferner kann die Signaleinheit auch dafür vorgesehen sein, einen Funktionszustand einer Komponente des Systemgeräts anzuzeigen. Dadurch ist eine Fernüberwachung des Systemgeräts über die drahtlose Schnittstelle in einfacher Weise möglich.

Gemäß einer bevorzugten Ausführungsform kann die drahtlose Schnittstelle über ein WiFi-Protokoll oder ein Bluetooth-Protokoll kommunizieren. Selbst wenn es einem Angreifer gelingt, die in diesen Protokollen verwendeten Schlüssel zu hacken, kann kein großer Schaden angerichtet werden, aufgrund der Funktionalität des Systemgerätes, nur autonom nach einem vorgegebenen Programm zu arbeiten.

Gemäß einer bevorzugten Ausführungsform kann die drahtlose Schnittstelle ferner eingerichtet sein, um eine Identifikation des Systemgerätes, insbesondere in Verbindung mit einem Funktionszustand des Systemgerätes oder mit von einer Sensoreinheit des Systemgerätes gemessenen Daten, zu senden. Dadurch kann aus dem empfangenen Signal das Systemgerät, welches die Daten sendet, identifiziert werden.

Gemäß einer bevorzugten Ausführungsform können die Auswahl der Programme unterschiedliche Zeiträume und/oder Arten der Datenerfassung aufweisen, unterschiedliche Beleuchtungsniveaus zeitabhängig oder in Abhängigkeit von gemessenen Daten umfassen, unterschiedliche Verschlüsselungen der gesendeten Daten umfassen und/oder unterschiedliche Signale oder Signalkombinationen auf einer Ausgabeeinheit, z.B. der drahtlosen Schnittstelle, ausgeben. Die Auswahl der möglichen Programme kann dabei jedoch so gestaltet sein, dass selbst im Fall eines unbefugten Wechsels des Programms die prinzipielle Funktionstüchtigkeit des Systemgerätes nicht ausgeschaltet werden kann.

Gemäß einer bevorzugten Ausführungsform kann das Systemgerät eine integrierte Uhr, z.B. zur Steuerung von definierten Zeitfenstern zum Datenempfang aufweisen. Alternativ oder zusätzlich kann auch eine Einrichtung zur Bestimmung des geografischen Ortes, z.B. GPS, in dem Systemgerät vorgesehen sein. Der geografische Ort kann von dem Systemgerät nach Installation eigenständig erfasst werden und z.B. zusammen mit einer Identifikation des Systemgerätes drahtlos versendet werden. Dadurch wird die Installation bzw. Initialisierung des Systemgerätes im Netzwerk vereinfacht.

Gemäß einer bevorzugten Ausführungsform kann ferner vorgesehen sein, dass die drahtlose Schnittstelle dafür eingerichtet ist, Daten drahtlos an eine leitungsgebundene zentrale Kommunikationseinrichtung zu senden und/oder an eine Zwischenstation zu senden, welche mit einer zentralen Kommunikationseinrichtung kabelgebunden oder drahtlos verbunden ist. Die Verwendung einer Zwischenstation hat den Vorteil, dass die Übertragungsstrecke der drahtlosen Schnittstelle des Systemgeräts nur dafür eingerichtet sein muss, um die drahtlose Kommunikation zwischen dem Systemgerät und der Zwischenstation über eine kurze Entfernung zu ermöglichen. Beispielsweise kann ein lokales Netzwerk, wie WLAN, dafür ausreichen. Die weitere Kommunikation von der Zwischenstelle zu einer zentralen Kommunikationseinheit kann dann kabelgebunden erfolgen oder durch eine drahtlose Kommunikation unter Verwendung eines anderen für längere Verbindungen vorgesehenen Standards erfolgen.

Gemäß einer bevorzugten Ausführungsform ist das Systemgerät dafür eingerichtet, die drahtlose Schnittstelle über eine vorgegebene Zeit abzuschalten. Dies dient nicht nur zur Energieersparnis sondern hat auch den Vorteil, dass ein unbefugter Zugriff auf das Systemgerät nicht mehr möglich ist, ohne die vorgegebenen Zeiten, zu denen das Systemgerät eingeschaltet ist, zu kennen.

Mit der Einschaltung der drahtlosen Schnittstelle kann das Programm, welches die Ausführungen ausführt, gewechselt werden. Beispielsweise kann ein Systemgerät für längere Zeit in einen Ruhezustand übergehen und erst beim Wiedereinschalten der drahtlosen Schnittstelle wird eines der vorgegebenen Programme ausgeführt. Beispielsweise kann ein Systemgerät, welches eine Außenbeleuchtungseinrichtung aufweist, bei Tageslicht vollständig, d.h. einschließlich der drahtlosen Schnittstelle, abgeschaltet werden und beim Wiedereinschalten zunächst in einen für die Dämmerung vorgesehenen Betriebszustand eintreten, bevor es in einen Nachtbetrieb umschaltet.

Die Erfindung sieht ferner ein System mit einer Zwischenstation und mit wenigstens einem Systemgerät, wie vorhergehend beschrieben, vor. Die Zwischenstation weist eine drahtlose Schnittstelle auf, welche dafür eingerichtet ist, Anweisungen zu senden, um das Programm, welches das Systemgerät ausführt, auf ein anderes, in dem Systemgerät gespeichertes Programm zu wechseln. Die Zwischenstation kann daher in kürzerer räumlicher Entfernung zu dem Systemgerät vorgesehen sein wie eine zentrale Kommunikationseinrichtung, mit welcher die Zwischenstation kabelgebunden kommuniziert oder über einen anderen drahtlosen Standard kommuniziert. Die drahtlose Schnittstelle der Systemgeräte bzw. der Zwischenstation müssen daher lediglich für eine Datenübertragung über eine kürzere Entfernung, z.B. bis 300 m oder bis 5 km eingerichtet sein.

Gemäß einer bevorzugten Ausführungsform ist die drahtlose Schnittstelle der Zwischenstation ferner dafür eingerichtet, einen Einschaltbefehl an ein Systemgerät zu übermitteln, wobei der Einschaltbefehl insbesondere auch einen Programmwechsel in dem Systemgerät bewirkt. Dadurch kann über die Zwischenstation der Programmwechsel in dem Systemgerät bewirkt werden, wobei die Programmwechsel jedoch auf die Auswahl der in dem Systemgerät gespeicherten Programme beschränkt ist.

Gemäß einer bevorzugten Ausführungsform weist die Zwischenstation ferner eine drahtgebundene Schnittstelle auf, welche dazu eingerichtet ist, Daten in Bezug auf Systemgeräte zu übersenden. Beispielsweise können der Funktionszustand des Systemgeräts, welches drahtlos an der Zwischenstation empfangen wird, mittels der drahtgebundenen Schnittstelle an die Zentrale gesendet werden. Eine Fehlfunktion oder ein Defekt eines Systemgeräts kann auch ohne Abfrage der Zwischenstation drahtlos (ggf. auch wiederholt) weitergegeben werden.

Vorzugsweise ist der Datenverkehr zwischen der Zwischenstation und der Zentrale ebenso wie zwischen dem Systemgerät und der Zwischenstation mit einem kryptografischen Verfahren, insbesondere einem symmetrischen oder asymmetrischen Verschlüsselungsalgorithmus, gesichert. Dies dient ferner der Gesamtsicherheit des Netzwerkes von jedem einzelnen Systemgerät über die Zwischenstation bis zur Zentrale.

Gemäß einer bevorzugten Ausführungsform enthalten die Daten, welche von der Zwischenstation gesendet werden, eine eindeutige Identifikation der Zwischenstation. In einem Netzwerk mit mehreren Zwischenstationen, die jeweils mit einer Gruppe von Systemgeräten kommunizieren, kann sich daher die Identifizierung eines Systemgeräts aus einer Identifizierungsnummer des Systemgeräts, welche nur innerhalb der Gruppe von Systemgeräten, die mit einer Zwischenstation verbunden sind, eindeutig ist und der Identifizierungsnummer der Zwischenstation zusammensetzen. Dies ermöglicht eine verhältnismäßig einfache eindeutige Adressierung jedes einzelnen Systemgeräts innerhalb eines Netzwerkes aus einer Vielzahl von Systemgeräten, die gruppenweise jeweils über eine von mehreren Zwischenstationen gesteuert werden.

Gemäß einer bevorzugten Ausführungsform ist die Zwischenstation ferner dafür eingerichtet, über die drahtlose Schnittstelle einen Defekt eines Systemgeräts oder einen sonstigen Funktionszustand des Systemgeräts abzufragen und an die Zentrale weiterzusenden. Dadurch kann in einfacher Weise der Funktionszustand aller Systemgeräte von der Zentrale überwacht werden.

Weitere Merkmale und Vorteile der vorliegenden Erfindung werden aus der Beschreibung einer bevorzugten Ausführungsform deutlich, die in Verbindung mit der beigefügten Figur gegeben wird.

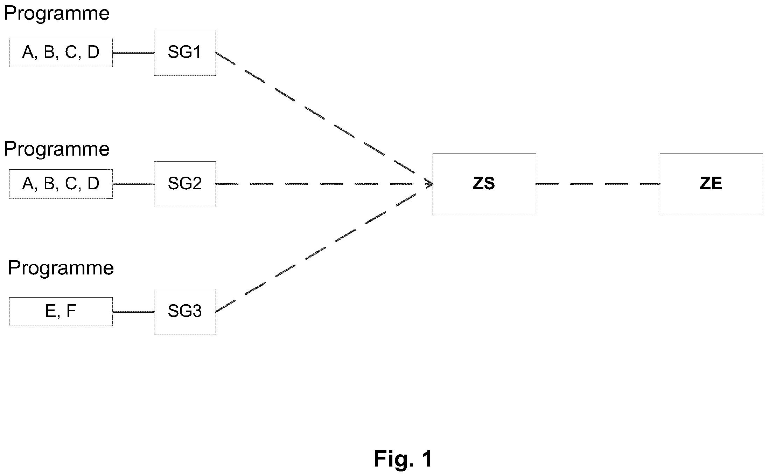

Figur 1 zeigt eine schematische Darstellung eines Netzwerkes aus drei Systemgeräten, einer Zwischenstation und einer Zentrale.

Ein Netzwerk aus mehreren Systemgeräten gemäß der vorliegenden Erfindung ist durch eine drahtlose Verbindung von mehreren Systemgeräten SG1, SG2 und SG3 und einer Zwischenstation ZS und einer Zentrale ZE gebildet. Die drei Systemgeräte umfassen in dem gezeigten Beispiel zwei Leuchten und eine Sensoreinheit. Die Leuchten können beispielsweise an einem Mast, an der Wand oder an der Decke befestigt sein oder direkt auf dem Boden z.B. als Poller oder in einem Maststück vorgesehen sein. Die Sensoreinheit kann in der Nähe der Leuchten vorgesehen sein, um beispielsweise Daten zur Steuerung der Leuchte, wie Helligkeit oder eine andere Umweltbedingung zu erfassen.

Die Systemgeräte SG 1 bis SG3 sind über eine drahtlose Verbindung mit einer Zwischenstation ZS gekoppelt. Es ist ferner auch möglich, dass die Systemgeräte unter einander drahtlos kommunizieren können (in der Figur 1 nicht dargestellt). Die Zwischenstation ZS ist über eine drahtgebundene oder drahtlose Verbindung mit einer Zentrale ZE gekoppelt.

Jedes der Systemgeräte SG1 bis SG3 weist einen Speicher auf, in dem mehrere Programme, welche eine Ausführungseinheit in dem Systemgerät steuern, gespeichert sind. In dem gezeigten Beispiel weisen die beiden Leuchten die Programme A, B, C und D auf. Die Sensoreinheit weist die Programme E und F auf. Die Ausführungseinheit des jeweiligen Systemgeräts, d.h. die Leuchte bzw. die Sensoreinheit, wird ausschließlich aufgrund des Programms im Systemgerät betrieben. Der Betrieb erfolgt autonom, d.h. auch wenn keine Verbindung zu der Zwischenstation ZS besteht, funktioniert das Systemgerät entsprechend einem der Programme in dem Speicher. Die Programme können beispielsweise bei den Leuchten unterschiedliche Beleuchtungsniveaus zeitabhängig regeln. Der Sensor kann entsprechend der Programme unterschiedliche Erfassungszeiträume oder unterschiedliche Empfindlichkeiten bei der Datenerfassung aufweisen.

Die drahtlose Verbindung von der Zwischenstation zu den beiden mit einer Leuchte versehenen Systemgeräten ermöglicht es, jeweils eines der Programme A bis D auszuwählen, mit welchen die Leuchte betrieben wird. Jedoch ist es über die drahtlose Schnittstelle nicht möglich, zusätzliche Programme hinzuzufügen oder die vorhandenen Programme abzuändern. Ein solches Hinzufügen oder Abändern von Programmen bedarf eines kabelgebundenen Zugriffs auf das Systemgerät selbst. Dadurch kann, selbst wenn die drahtlose Verbindung zwischen der Zwischenstation und dem Systemgerät durch einen nicht-autorisierten Zugriff abgeändert wird, lediglich das Programm abgeändert werden, in welchem das Systemgerät aktuell betrieben wird. Das Systemgerät kann jedoch weder gänzlich ausgeschaltet werden noch in einem vorher nicht vorhergesehenen Betriebsmodus betrieben werden. Hierdurch wird die Sicherheit des Systems erhöht, selbst wenn es einem Angreifer gelingt, in die Datenverbindung zwischen der Zwischenstation und dem Systemgerät einzugreifen.

Über die drahtlose Kommunikation zwischen den als Leuchte ausgeführten Systemgeräten SG1 und SG2 und der Zwischenstation kann ferner ein Funktionszustand der Leuchte an die Zwischenstation gesendet werden. Diese Daten können ferner an die Zentrale ZE weiterübermittelt werden.

Das als Sensoreinheit ausgestaltete Systemgerät kann in lediglich zwei verschiedenen Programmen E und F betrieben werden. Ein Wechsel der Programme ist wieder nur über die drahtlose Verbindung von der Zwischenstation zu dem Systemgerät möglich. Ferner dient die drahtlose Verbindung vom Systemgerät zu der Zwischenstation dazu, die Messdaten der Sensoreinheit zu übertragen. Diese Daten können ferner von der Zwischenstation an die Zentrale weitergegeben werden. Hierdurch kann beispielsweise eine Entscheidung für einen Programmwechsel in einer der beiden anderen Geräteeinheiten, welche eine Leuchte umfassen, aufgegeben werden. Wie vorhergehend beschrieben, wird der Programmwechsel von der zentralen Einheit über die Zwischenstation an die Systemgeräte weitergegeben.

In dem vorhergehenden Beispiel wurden die Systemgeräte als Leuchten bzw. als Sensoreinheit beschrieben. Es ist zu verstehen, dass Systemgeräte auch Signalgeräte, beispielsweise Ampelanlagen, oder Geräte für die Gebäudetechnik, wie Lüftung, Sonnenschutzeinrichtungen und dergleichen, umfassen können. Vorzugsweise sind jedoch lediglich Systemgeräte vorgesehen, zu deren Steuerung ein verhältnismäßig geringes Datenvolumen erforderlich ist, z.B. vergleichbar mit einem ZigBee-Netzwerk zur Steuerung von Beleuchtungsanlagen. Das Netzwerk kann insbesondere für die Steuerung von Außenoder Innenanlagen Anwendung finden. Die drahtlose Kommunikation von der Zwischenstation zu den Systemgeräten kann sich über bis zu 300 m oder bis über mehrere Kilometer erstrecken. In einer Alternative kann auch vorgesehen sein, dass die Systemgeräte direkt mit der Zentraleinheit verbunden sind. In diesem Fall entfällt die Zwischenstation, wobei die Zentraleinheit mit den Systemgeräten direkt drahtlos kommuniziert.

### BEZUGSZEICHENLISTE

- SG1, SG2, SG3: Systemgerät
- ZS: Zwischenstation
- ZE: Zentraleinheit
- A bis F: Programme

## Patentansprüche

1. Systemgerät zum Betrieb in einem Netz aus mehreren derartiger Systemgeräte, umfassend:
eine Ausführungseinheit zum autonomen Betreiben von einer Beleuchtungseinrichtung, Gebäudetechnik und/oder Sensortechnik, wobei der autonome Betrieb gemäß einem Programm erfolgt, welches in dem Systemgerät gespeichert ist, und
eine drahtlose Schnittstelle zum Empfangen von Anweisungen, wobei die Anweisungen einen Wechsel des Programms in ein anderes Programm von einer Auswahl von Programmen bewirkt,
wobei die Auswahl von Programmen auf dem Systemgerät installiert ist, **dadurch gekennzeichnet, dass** die Programme der Auswahl unveränderlich sind oder nur durch eine kabelgebundene Schnittstelle des Systemgeräts veränderlich sind.

2. Systemgerät nach Anspruch 1, wobei die drahtlose Schnittstelle dazu eingerichtet ist, nur innerhalb definierter Zeitfenster Anweisungen zu empfangen.

3. Systemgerät nach einem der vorhergehenden Ansprüche, wobei die drahtlose Schnittstelle ferner zum Senden eingerichtet ist, um Daten in Bezug auf den Betriebszustand des Systemgeräts drahtlos zu versenden.

4. Systemgerät nach einem der vorhergehenden Ansprüche, wobei die drahtlose Schnittstelle zum Senden von Daten eingerichtet ist und das Systemgerät ferner eine Sensoreinheit aufweist, und dafür eingerichtet ist, mit der Sensoreinheit erfasste Daten über die drahtlose Schnittstelle zu senden.

5. Systemgerät nach Anspruch 4, wobei die Sensoreinheit eingerichtet ist, eines oder mehrere von Folgenden zu erfassen: Licht, Bilder, Bewegungen, insbesondere Verkehrsdichte oder Parkplatzverfügbarkeit, Geschwindigkeiten von Fahrzeugen, Ort und Richtung von Verkehrsteilnehmern, Umweltbedingungen, insbesondere Temperatur, Feuchte und Druck.

6. Systemgerät nach einem der vorhergehenden Ansprüche, wobei das Systemgerät eine Signaleinheit aufweist, um visuelle, optische oder akustische Signale abzugeben, wobei die Signaleinheit insbesondere einen Funktionszustand einer Komponente des Systemgeräts anzeigen kann und der Funktionszustand ferner über die drahtlose Schnittstelle abgegeben werden kann.

7. Systemgerät nach einem der vorhergehenden Ansprüche, wobei die drahtlose Schnittstelle über ein WiFi-Protokoll oder Bluetooth kommuniziert.

8. Systemgerät nach einem der vorhergehenden Ansprüche, wobei die drahtlose Schnittstelle eingerichtet ist, um eine Identifikation des Systemgeräts, insbesondere in Verbindung mit einem Funktionszustand des Systemgeräts oder in einer Sensoreinheit des Systemgeräts gemessenen Daten, zu senden.

9. Systemgerät nach einem der vorhergehenden Ansprüche, wobei die Auswahl der Programme unterschiedliche Zeiträume und/oder Arten der Datenerfassung aufweisen, unterschiedliche Beleuchtungsniveaus zeitabhängig oder in Abhängigkeit von gemessenen Daten umfassen, unterschiedliche Verschlüsselungen der gesendeten Daten umfassen, und/oder
unterschiedliche Signale oder Signalkombinationen auf einer Ausgabeeinheit, z.B. der drahtlosen Schnittstelle, ausgeben.

10. Systemgerät nach einem der vorhergehenden Ansprüche, wobei das Systemgerät eine integrierte Uhr und/oder Einrichtung zur Bestimmung des geographischen Orts, z.B. GPS, aufweist.

11. Systemgerät nach einem der vorhergehenden Ansprüche, wobei die drahtlose Schnittstelle dafür eingerichtet ist, die Daten an eine leitungsgebundene Kommunikationseinrichtung zu senden und/oder an eine Zwischenstation zu senden, welche mit einer zentralen Kommunikationseinrichtung kabelgebunden oder kabellos verbunden ist.

12. Systemgerät nach einem der vorhergehenden Ansprüche, wobei das Systemgerät dafür eingerichtet ist, die drahtlose Schnittstelle über eine vorgegebene Zeit abzuschalten.

13. Systemgerät nach Anspruch 12, wobei bei einem Wiedereinschalten der drahtlosen Schnittstelle das Programm, welches die Ausführungseinheit ausführt, gewechselt wird.

14. System, umfassend eine Zwischenstation und wenigstens ein Systemgerät nach einem der vorhergehenden Ansprüche, wobei die Zwischenstation eine drahtlose Schnittstelle aufweist, welche dafür eingerichtet ist, Anweisungen zu senden, um das Programm, welches das Systemgerät ausführt, auf ein anderes, in dem Systemgerät gespeichertes Programm zu wechseln.

15. System nach Anspruch 14, wobei die drahtlose Schnittstelle der Zwischenstation ferner dafür eingerichtet ist, einen Einschaltbefehl an ein Systemgerät zu übermitteln, wobei der Einschaltbefehl insbesondere auch einen Programmwechsel in dem Systemgerät bewirkt.

16. System nach einem der Ansprüche 14 oder 15, wobei die Zwischenstation ferner eine drahtgebundene Schnittstelle zu einer Zentrale aufweist, welche dazu eingerichtet ist, Daten in Bezug auf das Systemgerät zu übersenden.

17. System nach Anspruch 16, wobei der Datenverkehr zwischen der Zwischenstation und der Zentrale mit einem kryptographischen Verfahren, insbesondere einem symmetrischen oder asymmetrischen Verschlüsselungsalgorithmus, gesichert ist.

18. System nach Anspruch 16 oder 17, wobei die Daten ferner eine eindeutige Identifikation der Zwischenstation enthalten.

19. System nach einem der Ansprüche 14 bis 18, wobei die Zwischenstation dafür eingerichtet ist, über die drahtlose Schnittstelle einen Defekt des Systemgeräts oder einen sonstigen Funktionszustand des Systemgeräts abzufragen und/oder an eine Zentrale weiterzusenden.

## Claims

1. A system device for operation in a network of multiple such system devices, comprising:
an execution unit for autonomously operating a lighting device, building technology and/or sensor technology, wherein the autonomous operation is according to a program stored in the system device; and
a wireless interface for receiving instructions,
wherein the instructions cause a change of the program to another program from a selection of programs,
wherein the selection of programs is installed on the system device, **characterised in that** the programs of the selection are invariant or are only variant by a wired interface of the system device.

2. The system device of claim 1, wherein the wireless interface is adapted to receive instructions only within defined time windows.

3. The system device of any preceding claim, wherein the wireless interface is further adapted for transmitting to wirelessly transmit data relating to the operating state of the system device.

4. The system device of any preceding claim, wherein the wireless interface is adapted to transmit data and the system device further comprises a sensor unit, and is adapted to transmit data sensed with the sensor unit via the wireless interface.

5. The system device of claim 4, wherein the sensor unit is adapted to sense one or more of: light, images, movements, in particular traffic density or parking availability, speeds of vehicles, location and direction of road users, environmental conditions, in particular temperature, humidity and pressure.

6. The system device of any preceding claim, wherein the system device comprises a signal unit for emitting visual, optical or acoustic signals, wherein the signal unit may in particular indicate a functional state of a component of the system device and the functional state may further be emitted via the wireless interface.

7. The system device of any preceding claim, wherein the wireless interface communicates via a WiFi protocol or Bluetooth.

8. The system device of any preceding claim, wherein the wireless interface is adapted to transmit an identification of the system device, in particular in connection with a functional state of the system device or data measured in a sensor unit of the system device.

9. The system device of any preceding claim, wherein the selection of the programs have different time periods and/or types of data acquisition,
comprise different illumination levels in a time-dependent manner or in dependence on measured data, comprise different encryptions of the transmitted data, and/or
emit different signals or signal combinations on an output unit, e.g. the wireless interface.

10. The system device of any preceding claim, wherein the system device has an integrated clock and/or device for determining the geographical location, e.g. GPS.

11. The system device of any preceding claim, wherein the wireless interface is adapted to transmit the data to a wired communication device and/or to transmit to an intermediate station which is wired or wirelessly connected to a central communication device.

12. The system device of any preceding claim, wherein the system device is adapted to switch off the wireless interface over a predetermined time.

13. The system device of claim 12, wherein when the wireless interface is switched back on, the program executing the execution unit is changed.

14. A system comprising an intermediate station and at least one system device according to any preceding claim, wherein the intermediate station has a wireless interface adapted to transmit instructions to change the program executing the system device to another program stored in the system device.

15. The system of claim 14, wherein the wireless interface of the intermediate station is further adapted to transmit a switch-on command to a system device, wherein the switch-on command in particular also causes a program change in the system device.

16. The system of any of claims 14 or 15, wherein the intermediate station further comprises a wired interface to a central office adapted to transmit data relating to the system device.

17. The system of claim 16, wherein the data traffic between the intermediate station and the central office is secured with a cryptographic method, in particular a symmetric or asymmetric encryption algorithm.

18. The system of claim 16 or 17, wherein the data further includes a unique identification of the intermediate station.

19. The system of any of claims 14 to 18, wherein the intermediate station is adapted to query a defect of the system device or another functional state of the system device via the wireless interface and/or to forward it to a central office.

## Revendications

1. Appareil de système destiné à fonctionner dans un réseau constitué de plusieurs appareils de système similaires, comprenant :
une unité d'exécution pour le fonctionnement autonome d'un dispositif d'éclairage, d'un système de bâtiment et/ou d'un système de capteurs, dans lequel le fonctionnement autonome a lieu selon un programme qui est enregistré dans l'appareil de système et
une interface sans fil pour la réception d'instructions, dans laquelle les instructions provoquent un changement du programme pour un autre programme parmi une sélection de programmes,
dans lequel la sélection de programmes est installée sur l'appareil de système, **caractérisé en ce que** les programmes de la sélection ne sont pas modifiables ou ne peuvent être modifiés que par une interface filaire de l'appareil de système.

2. Appareil de système selon la revendication 1, dans lequel l'interface sans fil est conçue pour recevoir des instructions uniquement dans une fenêtre de temps définie.

3. Appareil de système selon l'une des revendications précédentes, dans lequel l'interface sans fil est en outre conçue pour l'émission, afin d'émettre sans fil des données concernant l'état de fonctionnement de l'appareil de système.

4. Appareil de système selon l'une des revendications précédentes, dans lequel l'interface sans fil est conçue pour l'émission de données et l'appareil de système comprend en outre une unité de capteur et est conçue pour émettre les données saisies avec l'unité de capteur par l'intermédiaire de l'interface sans fil.

5. Appareil de système selon la revendication 4, dans lequel l'unité de capteur est conçue pour déterminer un ou plusieurs de ces éléments : lumière, images, mouvements, plus particulièrement la densité de circulation ou la disponibilité des places, les vitesses de circulation des véhicules, le lieu et la direction des participants au trafic, les conditions environnementales, plus particulièrement la température, l'humidité et la pression.

6. Appareil de système selon l'une des revendications précédentes, dans lequel l'appareil de système comprend une unité de signalisation afin d'émettre des signaux visuels, optiques ou acoustiques, dans lequel l'unité de signalisation peut afficher, plus particulièrement un état de fonctionnement d'un composant de l'appareil de système et l'état de fonctionnement peut en outre être émis par l'intermédiaire de l'interface sans fil.

7. Appareil de système selon l'une des revendications précédentes, dans lequel l'interface sans fil communique par l'intermédiaire d'un protocole Wifi ou Bluetooth.

8. Appareil de système selon l'une des revendications précédentes, dans lequel l'interface sans fil sans fil est conçue pour émettre une identification de l'appareil de système, plus particulièrement en lien avec un état de fonctionnement de l'appareil de système ou les données mesurées dans une unité de capteur de l'appareil de système.

9. Appareil de système selon l'une des revendications précédentes, dans lequel la sélection des programmes comprend des périodes et/ou des types de mesure de données différentes,
comprennent des niveaux d'éclairage différents en fonction du temps ou en fonction des données mesurées,
comprennent différents chiffrages des données émises et/ou
émettent différents signaux ou combinaison de signaux sur une unité d'émission, par exemple l'interface sans fil.

10. Appareil de système selon l'une des revendications précédentes, dans lequel l'appareil de système comprend une horloge et/ou un dispositif intégré pour la détermination du lieu géographique, par exemple GPS.

11. Appareil de système selon l'une des revendications précédentes, dans lequel l'interface sans fil est conçue pour envoyer les données à un dispositif de communication filaire et/ou à une station intermédiaire qui est reliée de manière filaire ou sans fil à un dispositif de communication central.

12. Appareil de système selon l'une des revendications précédentes, dans lequel l'appareil de système est conçu pour arrêter l'interface sans fil pendant un temps prédéterminé.

13. Appareil de système selon la revendication 12, dans lequel, lors d'une remise en marche de l'interface sans fil, le programme qui exécute l'unité d'exécution est changé.

14. Système comprenant une station intermédiaire et au moins un appareil de système selon l'une des revendications précédentes, dans lequel la station intermédiaire comprend une interface sans fil qui est conçue pour envoyer des instructions afin de changer le programme qui exécuté l'appareil de système pour un autre programme, enregistré dans l'appareil de système.

15. Système selon la revendication 14, dans lequel l'interface sans fil de la station intermédiaire est en outre conçue pour transmettre un ordre de mise en marche à un appareil de système, dans lequel l'ordre de mise en marche provoque plus particulièrement également un changement de programme dans l'appareil de système.

16. Système selon la revendication 14 ou 15, dans lequel la station intermédiaire comprend en outre une interface filaire avec une centrale, qui est conçue pour transmettre les données concernant l'appareil de système.

17. Système selon la revendication 16, dans lequel le trafic de données entre la station intermédiaire et la centrale est sécurisé avec un procédé cryptographique, plus particulièrement un algorithme de chiffrage symétrique ou asymétrique.

18. Système selon la revendication 16 ou 17, dans lequel les données contiennent en outre une identification unique de la station intermédiaire.

19. Système selon l'une des revendications 14 à 18, dans lequel la station intermédiaire est conçue pour détecter, par l'intermédiaire de l'interface sans fil, un défaut de l'appareil de système ou un autre état de fonctionnement de l'appareil de système et/ou pour le transmettre à une centrale.
